# EUROPEAN PATENT APPLICATION

(11) **EP 2 647 464 A1**
(43) Date of publication of application: **09.10.2013**
(21) Application number: 12162793.9
(22) Date of filing: 02.04.2012
(51) Int. Cl.: B23K 26/08, B23K 26/00

(54) **Laser ablation method by machining dots randomly**

(71) Applicant: Agie Charmilles New Technologies SA, 1217 Meyrin 1 (CH)
(72) Inventor: Conseil, David, 74 100 Etrembières (FR)
(74) Representative: De Colle, Piergiacomo

(57) **Abstract**

The invention relates to a laser ablation process for the engraving of the surface of a two or three dimensional workpiece (7), preferably made of metal or plastics. The process is used in machine tools using laser beam pulses (2) emitted by a laser head (1). The laser head comprises a galvanometer (13) for the deflection and determination of the position where the emitted laser beam pulses (2) shall strike and ablate the surface of the workpiece (7).

According the invention, the workpiece surface (7) is ablated pointwise by emitting one or more series of laser beam pulses (2) from the laser head (1) to produce therewith individual machining dots (12) on the workpiece surface (7). The position of a part or of all individual machining dots (12) is set randomly around the predefined and followed machining track (16) on the workpiece surface (7).

## Description

The present invention relates to a laser ablation method for the engraving of a surface of two or three dimensional workpieces according the generic part of claim 1, to software for machine tools controlling the laser ablation process correspondingly and to an according machine tool for the laser ablation.

Machines for machining workpieces by laser ablation are generally known. The European patent application EP 2 301 706 A2 describes for instance a possible technical design for such an apparatus.

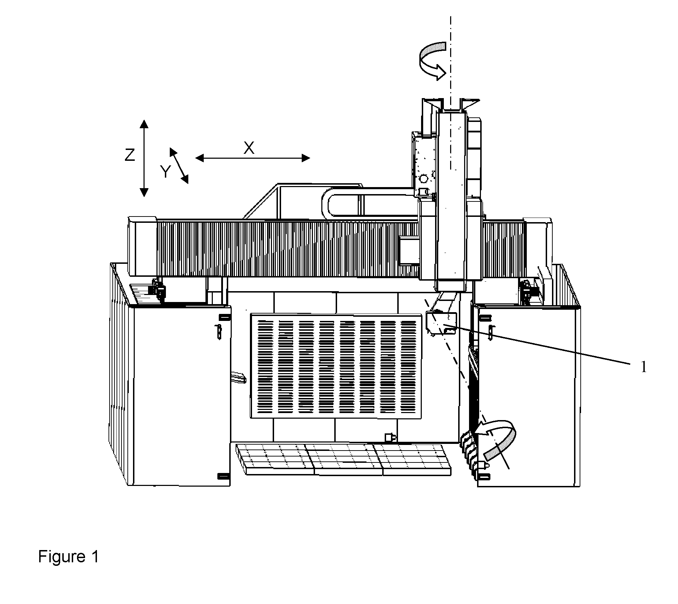

An imaginable configuration and design for such a machine for machining workpieces by laser ablation is shown in figure 1. The laser head 1 of the displayed machine operates with 5 mechanical axes and allows the positioning of the laser focal point and the direction of the emitted laser beam on the surface of a three-dimensional solid workpieces situated within the machine (not shown). Several machine configurations are imaginable: For instance a workpiece-holder or - as shown in figure 1- a laser head which is linear movable in three axis (Cartesian X, Y, Z system). Preferably, allowing a higher accuracy and flexibility, the workpiece-holder or the laser head are in addition able to rotate with high precision on two rotational axes.

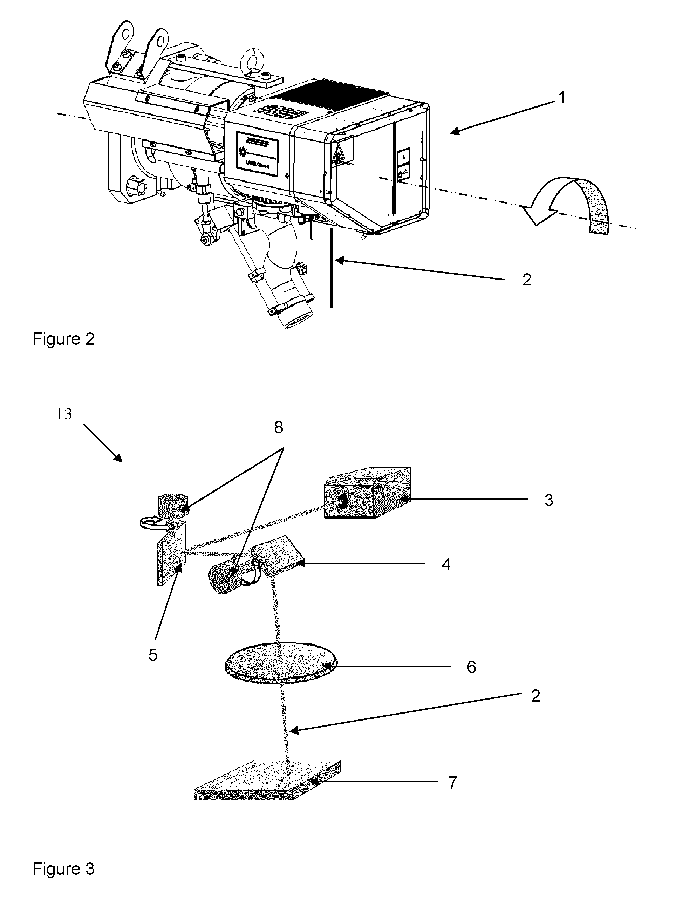

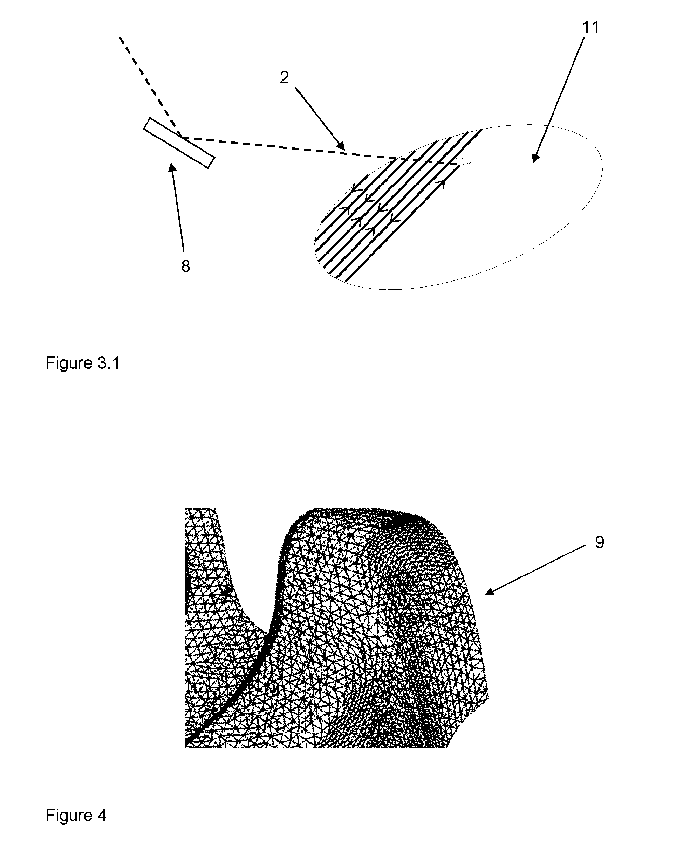

Figure 2 illustrates a possible laser head for machining workpieces by laser ablation. The shown machine's laser head 1 comprises in particular actors allowing its rotational movement, a laser source, optics and a so called galvanometer module. The schematic configuration and functional principle of such a galvanometer 13 is illustrated in the Figure 3. The laser source 3 emits a laser beam 2 (actually laser beam pulses), which is deflected by an X-axis mirror 4 and a Y-axis mirror 5 and passes through an F-theta lens 6 or a lens with dynamic field correction till it reaches the workpiece 7. This allows moving the beam 2 on a plane with a surface corresponding to the selected focal length. Focal lengths of up to 430 mm are state of the art. For further details on the construction of such a machine for the laser ablation reference is made to the above-mentioned European patent application EP 2 301 706 A2.

For applications according the inventive method explained further down, known systems allow on flat workpieces 7 to achieve a maximal, so called engraving or marking field for the laser beam of 300 x 300 mm for a 430 lens (see figure 3). On curved workpiece surfaces however, the laser engraving field is limited to the focalization capabilities of the lenses. The focalization capabilities usually allow a shift of the (image) plane in the range of 0.3 mm depending of the focal lens used. That number defines the so called "working depth" for the laser engraving. It delimits therewith the maximal obtainable engraving field without the necessity to reposition the laser head to another position. If the surface to be worked is curved and the working depth of the laser is not sufficient to reach the deeper parts of the workpiece surface, that surface parts need to worked in another process step. The workpieces to be engraved respectively textured will therefore be subdivided at least into two - in practice many - so called plots or patches.

Laser ablation methods used for the engraving of the surface of a workpiece operate by sublimating the (metallic) material on the surface of the workpiece. The laser ablation machining occurs in a multiplicity of process steps in which the surface structure is worked layerwise. The working of a surface in layers is due to the simple fact, that a laser beam is just able to ablate a surface down to a limited thickness. In fact, the laser is able to take away 1 to 5 µm of material in one passage. The texturing resp. engraving by laser ablation of a typical metallic workpiece requests usually a working in 20 to 100 passages (resp. layers) on the surface of the workpiece. The principle used to produce the desired structure, or texture, on the surface of the 3D mould is described for instance in the document DE 42 09 933 A1. The process can be seen as "inverted stereolithography": instead of raising the coats for building, the material is sublimed coat by coat by the machining as described for instance as well in a further publication, the EP 1189724 A0 resp. WO 0074891 A1. The layers are machined by the laser beam from the top of the 3D mould surface to the deepest part thereof.

The figure 3.1 illustrates schematically the known and used way a laser beam ablates the surface respectively predefined patch 11 of a workpiece: The (not displayed) laser head emits laser pulses which are deflected at two or more mirrors of a galvanometer 8 and hit the workpiece surface in the patch 11. Where the laser pulses hit the surface, material is evaporated. The laser beam 2 consisting of constantly emitted laser pulses is moved by the actors and mirrors of the galvanometer 8 in the commonly used vector-like manner on a predefined way, producing microscopic and parallel arranged corrugations on the workpiece surface delimited by the borders of the patch 11 (see parallel alignments in figure 3.1). The corrugations are formed by sublimating material away from the surface. The depth in which the ablation of material occurs typically reaches a range of 1 to 5 µm. Although technically possible, the ablation of thicker layers is usually not indicated due to quality reasons. For deeper engraving it is preferred to ablate in more layers to reach the requested result. For processing the workpiece surface, the laser beam always moves along the predefined parallels vectors on the displayed patch 11 of figure 3.1, jumping at the border of the patch 11 to the next position. To produce a texture respectively a relief on the surface, the laser pulses are switched off whenever the sublimation of material is not requested. This is the known and commonly used method for the laser texturing resp. engraving of a predefined patch on a workpiece (called vector-like working process). The method unfortunately produces visible borders at the margin of the patch.

The ablation process is conducted layerwise, working every defined patch of one layer before moving to the processing of the next layer. The patch borders of subsequent layers are usually not lying upon another to avoid the multiplication of visible traces.

The machine control system dedicated for such a laser ablation process accurately positions the laser head - with its for instance 5 degrees of freedom movement abilities - whenever necessary conveniently near the workpiece surface patch which is intended to be processed.

The computer files modeling the 3D surface of a solid workpiece to be worked are mesh files (see figure 4). The machine control system gets the 3d-coordinates of the workpiece surface memorized and uses that information for the local partial engraving by the laser head.

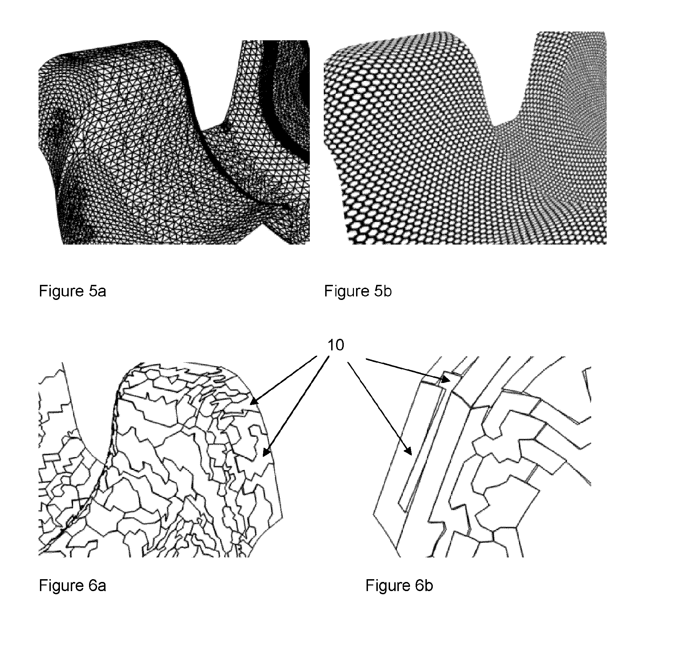

The textures to be ablated are additionally applied by software to the mesh file of the modeled 3D-surface of the workpiece. The application of the surface texture by software has many advantages compared to the physical plating used in the past. The texturing resp. engraving of a modeled 3D-surface by software is well known and particularly allows correcting visible distortions of the structure, which would inevitably occur with a traditional physical plating process on strongly contorted surface parts of a workpiece. The software is able to suitably distort or stretch the texture to be applied on those critical surface parts and allows herewith obtaining good results (compare the modeled 3D-surface of figure 5a and figure 5b).

A known method for the 3D laser engraving of an image respectively texture on the surface of a three dimensional workpiece by partially ablating a multiplicity of layers is described for instance in the already mentioned document WO 0074891 A1 (EP 1 189 724 A0).

The realization of a three dimensional texture on a surface of a workpiece requires as mentioned in most cases to split that surface into several patches depending on the curvature of the workpiece, according the requested machining accuracy and in view of further machining field characteristics offered by the laser head and its optics (focal length). Usually the patches do not exceed the size of 30 x 30 mm.

An example of such a workpiece surface breakdown in several patches is displayed with the figures 6a and 6b. The two figures display actually one layer on the workpiece, consisting of many patches 10. The figure 6b is derived from the laser ablation software. The patches 10 in figure 6b are virtually generated by the software, containing each the planar projection of the three dimensional texture to be applied on the real three dimensional workpiece surface. The projections on the patches 10 of the texture to be applied on the workpiece have to take account of the occurring optical distortion. The workpiece surface of a corresponding patch is often not necessarily plane. Defining the planar patch 10, the software needs to consider this optically essential detail. The working depth permitted by the lenses (up to 0.3 mm) corresponds actually to the maximal distance allowed between a real point on the workpiece surface and its projection on the planar patch 10 (see figure 6b). If that distance exceeds the allowed working depth of the laser apparatus, a new planar patch 10 needs to be defined by the software and the processing of that new patch will actually require a new alignment of the laser head 1.
For every - three dimensional - layer to be machined, the software will calculate and define new suitable planar patches according the given technical requirements. The software always considers of course the actual and real three dimensional shape of the workpiece surface (memorized as a mesh file in the memory of the processor) and the texture to be applied thereto.
The laser beam processes layer by layer and within each layer patch surface by patch surface by eventually repositioning the laser head. Ablating the workpiece in this way, results in ending with a machined workpiece containing the desired texture on its surface.

As shortly mentioned, the conventional way to ablate a workpiece by segmenting the surface into several portions leaves often traces at the borders of each patch. The corrugations generated by the laser beam movement in vector-like manner (see figure 3.1) leave at their end at the boundaries of each patch per se a trace. The machining of adjoin patches - having the exact same patch boundary - worsen the situation by creating an additional overlapping effect. Either the pulses produce a doubled removal of material or - in case the boundaries of two adjoining patches do not perfectly coincide but are slightly spaced from each other - a reduced material removal occurs at the boundary. In any case, the result is an undesired, visible border line on the boundaries of each defined patch.

A way to machine all patches of a workpiece reducing the formation of visible boundary lines is described in the document EP1 174 208. In that document, the formation of boundary lines is diminished by foreseeing certain overlapping areas between two adjoined patches. In the overlapping areas the removal of material is conducted by the machining of both overlapping patches. The chosen approach should result in the diffusion of the traces of the boundary lines generated by the laser beam moved in the vector-like manner.

Nonetheless, even the method disclosed in the EP1 174 208 does not always produce satisfying results. At the corner areas for instance, where four patches overlap (see for example figure 2 of EP1 174 208), the obtainable results are not always satisfying. Further, during the machining by patches, each patch may have a different optical rendering. This can be problematic since these reflections are visible on the machined material, but also in the case the workpiece represents a mould, on the molded workpiece. Another limitation is that the vectors of adjacent patches must be continuous (meaning each vector has to be straight and continue throughout the adjacent patches, respectively being aligned with the other vectors) when this method is applied.

The process disclosed in the EP1 174 208 - as every other known process up to date - works with the described vector-like ablation method as described in figure 3.1. That's the usual and known way to texture resp. engraving a workpiece-surface by laser ablation.

The present invention aims to eliminate the traces of conventional laser machining, meaning the machining traces at the junction, borders of two machining patches. A further scope of the invention is to improve the quality of the textured resp. engraved surface and its appearance.

The objective of the invention is achieved by providing a laser ablation process for the engraving of the surface of a two or three dimensional workpiece according to the features of the independent claim 1.

Thanks to the inventive laser ablation method, traces of conventional laser machining at the junction and borders of two machining patches are eliminated. Further, the quality and appearance of the engraved surface is as well improved.

The inventive ablation process can also be used just for the finishing of conventionally ablated workpieces, meaning surfaces ablated first in conventional vector-like manner and finished by machining layers according to the inventive method. That can be done just to cover the patch borders or to create a specific appearance of the ablated surfaces (sandblasting effect).

The inventive laser ablation process is of course also indicated to be used for the complete texture resp. engraving process on a surface. That means the inventive method is not restricted to its use just on foregoing conventionally ablated workpieces with the vector-like method.

The present invention is an innovative dot by dot engraving method that allows eliminating the traces at the boundaries of two adjacent patches occurring with conventional laser machining, particularly with a laser ablation process by laser beams in the vector like manner.

Moreover, this method also allows surface qualities that can be very useful for the later operational use of the workpiece (e.g. reduction of friction etc.) or just for its visual and/or decorative appearance. The inventive method produces surface qualities that cannot be obtained by conventional machining; respectively by using the conventional methods ablating according the vector principle (see e.g. EP1189724 and EP1174208).

The inventive laser ablation process is characterized by its difference to the known vector-like machining principle: Instead to ablate the workpiece surface by the laser beam exactly along a predefined machining track - as for instance explained in relation to the vector-like principle illustrated with figure 3.1. - and producing therewith microscopic, vector-like corrugations, the inventive ablation process is conducted dotwise and - to a certain extend - randomly. On one hand, the workpiece surface is ablated pointwise by emitting one or more series of laser beam pulses from the laser head to produce therewith individual machining dots on the workpiece surface and on the other hand, the location where the individual machining dots are produced is defined - within a certain range - randomly.

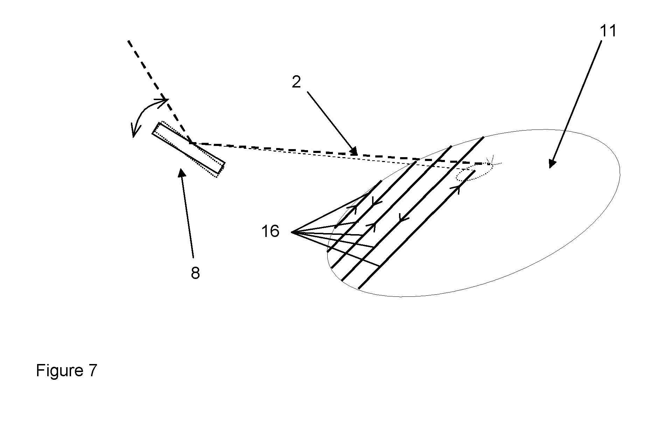

Figure 7 illustrates the inventive ablation process: A theoretical machining track 16 on the workpiece surface respectively on the patch 11 is predefined by the machine control or its software. The ablation process on the workpiece is still intended to be conducted along that machining track 16, but: The laser source produces individual machining dots which are randomly located around the defined machining track 16. The casual allocation of those individual machining dots lies within a certain (definable) range around the machining track 16 (indicated in figure 7 by a small blotted circle). The casual allocation of the individual machining dots is conducted by a dislocation of the laser pulse beam 2 via the galvanometer 8 and the machine control of the laser head.

Thanks to the production of single dots and of their casual allocation along and around a predefined line, no strait corrugations or similar are produced anymore, as occurring with the known vector-like machining principle. As a result, adjoined patches do not manifest anymore visible traces at their common borders. Apart of that, a more attractive appearance of the machined surface is produced.

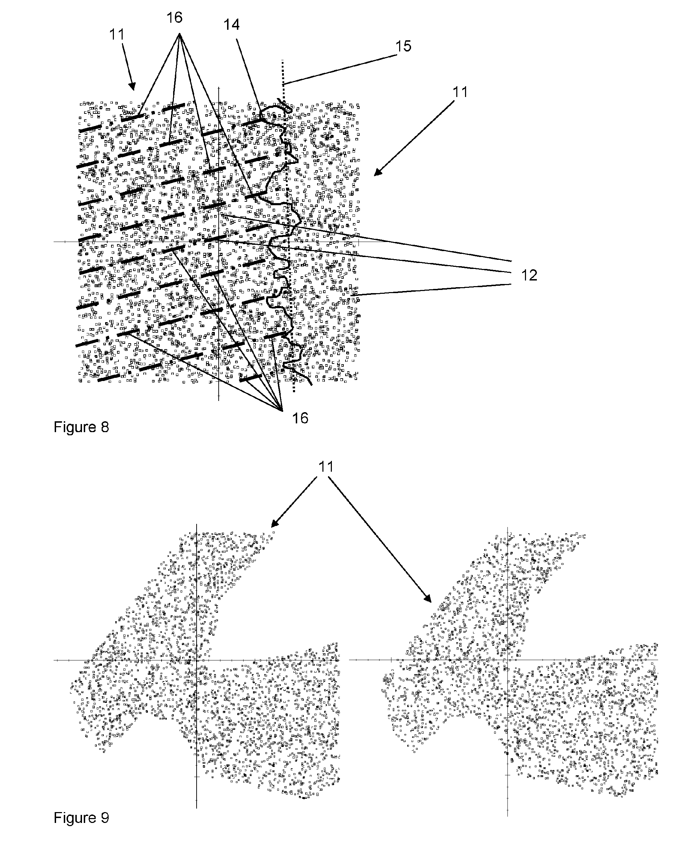

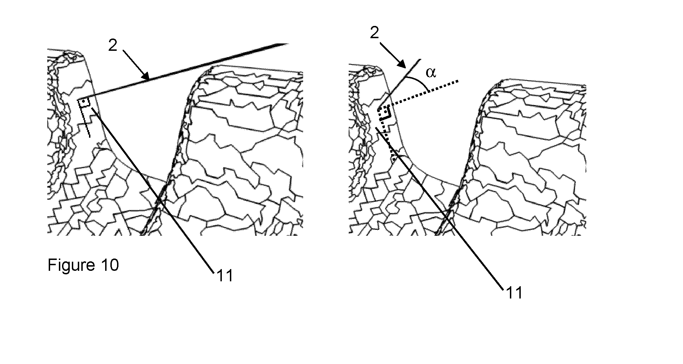

Figure 8 illustrates two different, adjacent patches 11 theoretically delimited by the boundary line 15. Although the machining tracks 16 lying within the left patch 11 are regularly resp. parallel aligned and do exactly end at the boundary line 15, the multiplicity of individual machining dots 12 of the patches 11 are casually arranged within the left patch 11. Some of the individual machining dots 12 produced during the machining of the left patch 11 are lying on the right-side of the boundary line 15, that means on the right patch 11. As an effect, not exact boundary line delimiting the two patches 11 is produced. The shown boundary line 14 of figure 8 does more schematically indicate the not clearly delimited border of the machined patch 11 (the line 14 does not exist in reality). Both adjoining patches 11 will have individual machining dots 12 lying on the other side of the theoretical boundary line 15. In practice this offers the big advantage, that no trace of the boundary between two adjoining patches will actually be visible on the ablated workpiece. As a matter of fact, the boundaries between two patches will appear blurred and - on broader scale - no trace will result in being visible for the human eye.

The obtainable results with the invention respectively the quality of the textured surface can be further improved by the modification of the following parameters in the inventive laser ablation process:
- The configurable machining dot density per square millimetre
- The configurable duration of emission of the laser by position and machining dot (the longer it is, the more the dots will be marked on the workpiece surface)
- The configurable power and the frequency of the pulsed laser.

On the other hand, the user has the option of setting several machining passes for the ablation process of specific layers. When one wants to get a dot density of 1800 per square millimetre, it is possible to carry out, for example, 6 passes of 300 dots per square millimetre, the dots being located at different positions between the different passes (see for example the illustration in the last figure 9, showing two passes on the same patch with machining dots located at different positions).This allows obtaining particularly good results at the boundaries of different adjacent patches, because a too high density of dots may tend to the opposite effect of marking the 3D volumetric workpiece at the boundaries of the patches.

The patches defined on the workpiece surface are usually machined with a laser beam striking and ablating the surface in a direction generally perpendicular to the processed patch surface. To be able to machining a patch in a perpendicular direction, it is common to position the laser head accordingly. Thanks to the laser heads abilities to move on 5 axes (2 of them rotational), this is usually not a problem.
In most cases, the plane surfaces from the breakdown of the 3D solid workpiece can be machined with a laser beam having a direction perpendicular to the place surface 10 to be processed.
However, if a workpiece is groove-shaped or contains other deep recesses with strong inclinations, the laser engraving of those surface parts constitutes a problem: With the traditional perpendicular allocation of the laser head, the emitted laser beam would collide with other surface parts of the workpiece. The left image of figure 11 illustrates the limits for a traditional perpendicular allocation of the laser head. The emitted laser beam 2 cannot machine the entire patch 11 without colliding with the right part of the workpiece and other patches located deeper are not accessible for the laser engraving.
Thanks to a preferred variant of the invention illustrated in the right image of figure 11, the inventive laser ablation process can as well occur with laser beams 2 which are inclined to the direction perpendicular to the patch surface 11. The angle of this inclination α (respectively the constantly changing angle α) can be calculated automatically by the inventive software for the laser control system and can, for instance, take account of the shape of the workpiece, avoiding in that way a undesired collision of the emitted laser beam 2 with other surface parts or even a mechanical collision of a part of the machine, for example the laser head, with the workpiece. If the surface to be machined does not cover the entire workpiece, it will be necessary to consider the volume of the whole 3D workpiece in order to calculate the possible collisions through a different mesh file.

For a same three dimensional solid workpiece, the angles of different patches may be combined: the angles calculated automatically and those programmed; this combined solution improves the quality and accuracy of laser machining.

In case the laser does not machine at the normal of the plane surface, the program automatically performs the calculations necessary to work with inclined laser beams and considers eventually necessary corrections to obtain the same quality as that of machining normal to the plane.

In this variant, the inventive laser ablation process is conducted by engraving the surface of the workpiece (7) with laser beam pulses (2) striking the patch (11) surface at a direction (α) inclined to the perpendicular direction of the patch (11).

The invention is a laser ablation process for the engraving of the surface of a two or three dimensional workpiece, preferably made of metal or plastics, to be used in a machine tool using laser beam pulses emitted by a laser head apparatus. Such a laser head comprises one or more lenses and a galvanometer containing mirrors for the deflection and determination of the position where the emitted laser beam pulses shall strike and ablate the surface of a workpiece. The galvanometer contains of course the necessary control system for the proper execution of the necessary working process. That control system is connected to the machine control system of the entire machine tool. Preferably, the inventive laser ablation process follows actually a predefined and general machining track on the workpiece surface during the laser ablation process. The inventive process is characterized in that, the workpiece surface is ablated pointwise by emitting one or more series of laser beam pulses from the laser head to produce therewith individual machining dots on the workpiece surface. According to the invention, the position of a part or of all individual machining dots is set randomly around the predefined and generally followed machining track on the workpiece surface.
The machining track is therefore a more theoretical resp. abstract defined path followed by the laser head resp. galvanometer than a physically given line, since the most dots are being set apart of that track.

Preferably for working according the inventive laser ablation process, the two or three dimensional surface of the workpiece to be machined is subdivided into patches, which are delimited from each other by boundary lines. The machining of the workpiece surface by laser ablation is generally conducted along the predefined machining tracks by producing individual machining dots on the workpiece surface.

In a preferred embodiment of the invention the amount of emitted laser beam pulses per series or the produced machining dot density [mm⁻²] on the workpiece surface is configurable.

In another variant of the invention, the duration of the emission of individual laser pulses is configurable according to the position and machining dot to be produced. It is as well possible, that that the power and/or the frequency of the emitted laser beam pulses are configurable.

Of course it is imaginable, that the machining track has a linear as a non-linear form or is completely randomly chosen. That means, that the galvanometer does not follow a predefined machining track on the workpiece surface, but the entire patch is subjected to randomly set machining dots.
In this variant, the patch is preferably machined just by defining the produced machining dot density [mm-²] on the patch, the individual machining dots being produced randomly on the surface of that patch.

The inventive laser ablation process works preferably with planar patches, whereby the process takes account of the optical distortion effectually occurring due to the projection of three dimensional workpiece surfaces on the planar patch.

As described before, the inventive laser ablation process is conducted preferably by engraving the surface of the workpiece layerwise.

Preferably, the inventive laser ablation method is just used for the finishing of a workpiece surface machined before with the traditional, vector-like machining process. In this case a first part of the layers are ablated with the conventional vector-like working process and a following second part of the layers are ablated according to the inventive laser ablation process. Usually, the inventive laser ablation method just needs to be used to process the very last layers, the last layer or the last two layers or up to the last five layers of an entire engraving process. This should be sufficient to blur the traces generated by the forgoing traditional vector-like machining process.

In another variant of the invention, the laser ablation process is conducted by engraving the surface of the workpiece with laser beam pulses striking the patch surface at a direction α inclined to the perpendicular direction of the patch.

The invention is suitable to be used in a software program made for these appliances. Particularly for softwares used in machines and machine tools, working with or controlling a laser ablation process.

The invention relates of course as well to the entire machine tool or to machine control systems for the engraving of the surface on a two or three dimensional workpiece with the inventive laser ablation process, preferably to machine tools with laser heads able to execute movements in three translational axis (X,Y,Z) and two rotational axis.

### References:

- 1: laser head
- 2: laser beam
- 3: laser source
- 4: X-axis mirror
- 5: Y-axis mirror
- 6: F-theta lens
- 7: workpiece
- 8: actors, galvanometer drives
- 9: mesh file of a solid three dimensional workpiece
- 10: plane surface
- 11: patch, plot
- 12: machining dots
- 13: galvanometer
- 14: boundary lines
- 15: median boundary line
- 16: theoretical machining track

## Claims

1. Laser ablation process for the engraving of the surface of a two or three dimensional workpiece (7), preferably made of metal or plastics, in a machine tool using laser beam pulses (2) emitted by a laser head (1), which comprises one or more lenses and a galvanometer (13) containing mirrors (4, 5) for the deflection and determination of the position where the emitted laser beam pulses (2) strike and ablate the surface of the workpiece (7), a predefined machining track (16) on the workpiece surface (7) being followed during the laser ablation process,
the process being **characterized in that**,
the workpiece surface (7) is ablated pointwise by emitting one or more series of laser beam pulses (2) from the laser head (1) to produce therewith individual machining dots (12) on the workpiece surface (7),
the position of a part or of all individual machining dots (12) is set randomly around the predefined and followed machining track (16) on the workpiece surface (7).

2. Laser ablation process according to claim 1, **characterized in that** the two or three dimensional surface of the workpiece to be machined is subdivided into patches (11), which are delimited from each other by boundary lines (15) and the machining of the workpiece surface (7) by laser ablation being generally conducted along the predefined machining tracks (16) by producing individual machining dots (12) on the workpiece surface (7).

3. Laser ablation process according to claim 2 or 3, **characterized in that** the amount of emitted laser beam pulses (2) per series or the produced machining dot (12) density [mm-²] on the workpiece surface (7) is configurable.

4. Laser ablation process according to one of the preceding claims, **characterized in that** the duration of the emission of individual laser pulses (2) is configurable according to the position and machining dot (12) to be produced.

5. Laser ablation process according to one of the preceding claims, **characterized in that** the power and/or the frequency of the emitted laser beam pulses (2) are configurable.

6. Laser ablation process according to one of the preceding claims, **characterized in that** the machining track (16) has a linear or a non-linear form or is randomly chosen.

7. Laser ablation process according to one of the claims 2 to 6, **characterized in that** the laser ablation process does not follow a predefined machining track (16), preferably the patch (11) is just machined by defining the produced machining dot (12) density [mm⁻²] on the patch (11), the individual machining dots (12) being produced randomly on the surface of the patch (11).

8. Laser ablation process according to one of the claims 2 to 7, **characterized in that** the laser ablation process works with planar patches (11) and that the process takes account of the optical distortion effectually occurring due to the planar projection of three dimensional workpiece surface represented by the planar patch (11).

9. Laser ablation process according to one of the preceding claims, **characterized in that** the laser ablation process is conducted by engraving the surface of the workpiece (7) layerwise.

10. Laser ablation process according to claim 9, **characterized in that** a first part of the layers are ablated with the conventional vector-like working process and a following second part of the layers are ablated according to the laser ablation process as defined in one of the claims 1 to 8,
preferably the laser ablation process according one of the claims 1 to 8 is just used to ablate the last layer or up to the 5 last layers.

11. Laser ablation process according to one of the preceding claims, **characterized in that** the laser ablation process is conducted by engraving the surface of the workpiece (7) with laser beam pulses (2) striking the patch (11) surface at a direction (α) inclined to the perpendicular direction of the patch (11).

12. Software for the engraving of the surface on a two or three dimensional workpiece by laser ablation in machine tools, controlling the laser ablation process according to one of the preceding claims.

13. Machine tool for the engraving of the surface on a two or three dimensional workpiece by laser ablation, comprising a laser head (1) with a laser source (3), a galvanometer (13) and a machine control system, **characterized in that** the machine control system controls the laser ablation process according to the processes defined in one of the preceding process claims or with the software according to claim 12.

14. Machine tool for the engraving of the surface on a two or three dimensional workpiece by laser ablation according to claim 13, characterized that the laser head (1) can execute movements in three translational axis (X,Y,Z) and two rotational axis.

15. Machine tool for the engraving of the surface on a two or three dimensional workpiece by laser ablation according to one of the preceding process claims, characterized that the workpiece is mounted on a holder which can execute movements in three translational (X,Y,Z) axis.
